# EUROPÄISCHE PATENTSCHRIFT

(11) **EP 3 917 710 B1**
(45) Veröffentlichungstag und Bekanntmachung des Hinweises auf die Patenterteilung: **05.03.2025**
(21) Anmeldenummer: 20703131.1
(22) Anmeldetag: 22.01.2020
(51) Int. Cl.: B23D 47/12, B27B 5/34, B27B 7/04

(54) **DOPPELSPINDELKREISSÄGE ZUM SÄGEN VON HOLZ**
DUAL-SPINDLE CIRCULAR SAW FOR SAWING WOOD
SCIE CIRCULAIRE À DOUBLE BROCHE POUR SCIER DU BOIS

(30) Priorität: 30.01.2019 AT 500762019
(43) Veröffentlichungstag der Anmeldung: 08.12.2021
(73) Patentinhaber: Häupl, Christian, 5020 Salzburg (AT)
(72) Erfinder: Häupl, Christian, 5020 Salzburg (AT)
(74) Vertreter: Hübscher & Partner Patentanwälte GmbH
(86) Internationale Anmeldenummer: PCT/AT2020/060018
(87) Internationale Veröffentlichungsnummer: WO 2020/154752

(56) Entgegenhaltungen:
- WO-A1-00/67967
- DE-A1- 19 955 590
- DE-A1- 2 336 629

## Beschreibung

### Technisches Gebiet

Die Erfindung bezieht sich auf eine Doppelspindelkreissäge nach dem Oberbegriff des Anspruchs 1.

### Stand der Technik

Die Verwendung von Doppelspindelkreissäge hat sich in den vergangenen Jahrzehnten im Bereich der Sägentechnologie zur Verarbeitung von Rund und Kantholz durchgesetzt. Gattungsgemäße Vorrichtungen sind beispielsweise aus der DE 40 38 129 A und der EP 0 785 051 A bekannt. Die wesentlichen Vorteile dieser Technologie liegen in einer Schnittfläche mit den besten Oberflächeneigenschaften, einer exakten Schnitthaltigkeit und sehr hohen Schnittleistungen. So kann die Kreissäge selbst als Gruppensäge ausgestaltet sein, also mehrere Schnitte gleichzeitig mit mehreren auf einem gemeinsamen Werkzeug angeordneten Sägeblättern durchführen, womit besonders hohe Volumenleistungen mit relativ einfachen Maschinen erzielt werden können.

Doppelspindelkreissägen weisen durch die Kreissägeblätter und deren maximalen, sinnvollen Durchmesser technisch bedingt eine beschränkte Schnitthöhe auf, weshalb der Schnittvorgang auch von zwei gegenüberliegenden Seiten her, mit zwei Sägegruppen vollzogen wird, wobei Sägeblätter stets paarweise in einer gemeinsamen Schnittebene arbeiten. Das Schnittgut wird zwischen den Sägespindelachsen durch die Doppelspindelkreissäge mit einem geeigneten Fördertrieb durchgeschoben.

Zudem sind die zwei Sägegruppen mit einem in Schnittrichtung liegenden Versatz angeordnet, sodass eine, einige Millimeter große vertikale Überlappung der Fliehkreise der in ein und derselben Schnittebene arbeitenden Kreissägblätter für ein sauberes Durchschneiden des Schnittholzes vorliegt. Diese von seitlichem Versatz freie Überlappung ist Voraussetzung für eine ebene Oberfläche der Schnittware.

Um das zu gewährleisten ist es erforderlich, dass die Sägespindeln der Sägegruppen in ihrem radialen Abstand zueinander, je nach Kreissägeblattdurchmesser, verstellbar und zudem bei horizontalen Spindeln der Höhe nach verstellbar, sowie bei vertikaler Spindellage der Seite nach verstellbar sind, sodass die unterschiedlichen Gesamtschnitthöhen auf beide Sägegruppen zu gleichen Hälften aufgeteilt werden können. Zur Vermeidung eines seitlichen Versatzes ist die Lage der Sägespindeln in Sägespindelachsrichtung einstellbar.

Für kleine, nicht in Doppelspindelkreissägen arbeitende Sägegruppen ist es bekannt kleinere Sägespindelmotore mit geringeren Motorleistungen und einem kurz auskragenden Sägewellenstummel zu verwenden. Für einen Einsatz in Doppelspindelkreissägen sind diese allerdings nicht geeignet, da die Motore auf Grund der leistungsbedingten Dimensionen den Einsatz nicht erlauben. Es ist nicht möglich eine kleinere Einheit maßstäblich derart zu vergrößern, damit sie in einer Doppelspindelkreissäge zum Einsatz kommen kann. Deswegen sind die bekannten Sägewerkzeuge auch beiderends in einem Maschinenrahmen gelagert und erfolgt der Antrieb der Sägespindeln über Riementriebe, was wiederum eine sehr hohe Wechselbelastung für die Sägespindel darstellt.

Zur Veranschaulichung sind beispielsweise Richtwerte der technischen Daten einer Sägegruppe dargestellt. Es ist eine Motorleistung von rund 600 KW (bei 3000 rpm) erforderlich, wobei die Motordrehzahl von 0 bis 4000 rpm variieren kann. Der Außendurchmesser eines diesbezüglichen Normmotors würde sich auf rund 900 mm belaufen und damit Kreissägeblätter mit mindestens diesem Durchmesser bedingen.

Eine bekannte Sägemaschine DE 19955590 A1 weist eine Mehrzahl, nämlich vier je Maschineneinheit, von quer zur Vorschubrichtung des Sägegutes unabhängig voneinander verstellbaren Sägeachsanordnungen auf, wobei jede der vier Sägeachsen wenigstens ein in das Sägegut einschneidendes Sägeblatt trägt. Das Holz wird also zwischen vier Sägeachsen geschnitten und nicht wie bei einer erfindungsgemäßen Doppelspindelkreissäge zwischen zwei. Zudem umfasst die Sägemaschine mehrere Maschineneinheiten.

Die Antriebsleistung und Drehzahl ergibt sich aus den Erfahrungswerten bei konventionellen Hochleistungs - Kreissägemaschinen in denen mit einer gesonderten Sägenspindel gearbeitet wird und die Kraft über Riemen übertragen werden muss. Der Riemenzug, der für einen Riementrieb dieser Größenordnung erforderlich ist übersteigt bei weitem die Lagerbelastung die durch die regulären Schnittkräfte auftritt. Derartige Kräfte bedingen daher größere Lager, die wiederum für die erforderlichen Drehzahlen nicht geeignet sind. Um diese Problematik zu umgehen wurden bereits Riementriebe vorgeschlagen, die in zwei um 180 Grad zueinander versetzte, in entgegengesetzter Richtung ziehende Riemen umfassen. Durch den Umstand, dass die Sägespindeln zueinander verstellt werden müssen, ergibt sich dabei eine sehr aufwendige, etwa 5 Tonnen schwere Konstruktion, deren Schnittgenauigkeit unter 0,1 mm liegen soll.

Die WO 00/67967 A1 offenbart eine Doppelspindelkreissäge nach dem Oberbegriff des Anspruchs 1.

### Darstellung der Erfindung

Der Erfindung liegt somit die Aufgabe zugrunde, eine Doppelspindelkreissäge der eingangs geschilderten Art zu schaffen, die eine saubere Schnittführung in engen Toleranzen erlaubt und dabei kompakt baut und einen raschen und einfachen Sägewerkzeugwechsel ermöglicht.

Die Erfindung löst die gestellte Aufgabe durch eine Doppelspindelkreissäge mit der Kombination von Merkmalen des Anspruchs 1. Vorteilhafte Weiterbildungen der Erfindung sind den abhängigen Ansprüchen zu entnehmen.

Da der Motor direkt auf der Sägespindel sitzt und so auf die Sägespindel übermäßig belastende externe Antriebe verzichten werden kann, erfolgt keine übermäßige Biegebeanspruchung der Welle und keine dadurch bedingte Auslenkung des an die Sägespindel angesetzten Sägewerkzeuges, was eine saubere Schnittführung in engen Toleranzen und die fliegende Lagerung des Sägewerkzeuges erlaubt. Diese fliegende Lagerung des Sägewerkzeuges ermöglicht wiederum einen raschen und einfachen Sägewerkzeugwechsel. Der Antrieb, insbesondere Elektromotor od. dgl., mit der schweren Sägespindel und deren hohem Massenträgheitsmoment ist sehr günstig um die im Sägebetrieb auftretenden stoßweisen Belastungen zu glätten und um eine Fortsetzung der Belastungsstöße in das elektrische System mit Folgeschäden zu vermeiden.

Die Folge dieser sehr vorteilhaften Anordnung ist, dass der Anker des Antriebs zwischen Festlager und Loslager direkt auf der Sägespindel sitzt. Das Festlager ist insbesondere zwischen Anker und Sägewerkzeug angeordnet, um die Toleranzen der Maßhaltigkeit bei Temperaturänderungen der Sägespindel und damit verbundenen Längenänderung in sehr geringen Bereichen zu halten. Damit der Außendurchmesser des Antriebs, insbesondere des Elektromotors klein genug gehalten werden kann, er muss ja den Kreissägeblattdurchmesser unterschreiten, damit eine entsprechende Einstellung der beiden Achsen mit dem richtigen Abstand ermöglicht wird, weist dieser eine entsprechende Anker- und damit Statorlänge auf. Der Kreissägeblattdurchmesser sollte so klein wie möglich bleiben da ein zu großer Außendurchmesser negative Auswirkungen auf die Steifheit der Kreissägeblätter und damit auf das Schnittergebnis hätte.

Gegenüber dem Stand der Technik, mit zum Antriebsmotor zusätzlichen Kraft-übertragungselementen und damit gegebenen zusätzlichen Verlustursachen, ist bei erfindungsgegenständlichen Sägegruppen ein erheblich höherer Wirkungsgrad gegeben. Es ist mit einem rund vier Prozent besserem Wirkungsgrad zu rechen.

Mit einer erfindungsgemäßen Doppelspindelkreissäge kann das Holz je Spindel auf beiden Seiten seiner Scheitelebene mit auf einer Sägenbüchse zwischen Sägeblattlehren fest aufgespannten Sägebättern geschnitten werden.

Zur Vereinfachung eines Wechsels des Sägewerkzeuges, insbesondere der Sägegruppen, wie er im Betrieb bei jeder Produkt- (Dimensions-) änderung und bei einem Schneidenwechsel erforderlich ist, umfasst das Sägewerkzeug vorzugsweise wenigstens ein auf einem Werkzeugspanner, einer Art Buchse, auswechselbar aufgenommenes Sägeblatt, insbesondere eine Kreissägeblattgruppe.

Der Werkzeugspanner kann über eine Passfederverbindung an die Sägespindel angesetzt werden, wozu der Werkzeugspanner beispielsweise eine koaxiale, zylindrische Bohrung aufweist, und damit auf einem entsprechenden der Sägespindel zugeordneten Achsstummel sitzt. Die Drehfestigkeit ist durch eine Paßfeder gewährleistet.

Besonders vorteilhaft ist es allerdings, wenn der Werkzeugspanner über einen Schnellwechselkonus an der ein entsprechendes Gegenstück in Form eines konischen Achsstummels aufweisenden Sägespindel lösbar befestigt und vorzugsweise mit einer zur Sägespindelachse koaxialen Schraubverbindung in der Montagestellung gesichert ist. Der Einsatz der Sägenbüchse mit dem Schnellwechselkonus und der Schraubensicherung ist in Folge der fliegenden Lagerung des Sägewerkzeuges möglich und erlaubt einen besonders raschen Sägewerkzeugwechsel. Zudem bietet der rohrförmige Werkzeugspanner die Möglichkeit, die Einsatzbedingungen der Kreissägeblätter stark zu verbessern.

Ist ein Kopf zur Betätigung der Schraubverbindung frei drehbar aber axial gesichert im Werkzeugspanner gelagert, dann kann der Werkzeugspanner nicht nur vorteilhaft auf der Sägespindel gesichert, sondern auch gleichermaßen von der Sägespindel abgezogen werden, da die Schraubverbindung zugleich als Abzugswerkzeug wirkt.

Der dargestellte Schnellwechselkonus ist nicht auf eine Verwendung mit der vorliegenden Erfindung beschränkt. Er kann auch eigenständig an bekannten Doppelspindelkreissägen eingesetzt werden.

Um besonders hohe Leistungen übertragen zu können, ist es nach einer Weiterbildung der Erfindung zur Vermeidung thermischer Probleme vorgesehen, den Elektromotor flüssigkeitsgekühlt auszuführen. Zudem können der Anker, der Stator, das Festlager und das Loslager flüssigkeitsgekühlt sein, wozu vorzugsweise vier mittels Temperaturregelventilen unabhängig voneinander temperaturregelbare Kühlkreise vorgesehen sind. Damit können auch die thermischen Auswirkungen des Elektromotors auf die im selben Gehäuse angeordneten Lager als auch die Lagerverlustleistung mit einer intelligenten Flüssigkeits - Kühlung abgefangen werden. Auch kann die Flüssigkeitskühlung zur Vermeidung von Taupunktsunterschreitungen im Gehäuse mit einer Temperaturregelung und gegebenenfalls mit einer Heizung ausgestattet sein. Es ist von Vorteil die Temperatur des Kühlmediums mittels Heizung im Stillstand und mittels Kühlung im Betrieb möglichst in einem gewünschten Bereich zu halten, um temperaturänderungsbedingte Maßänderungen der Sägespindel zu vermeiden. Der erforderliche Durchfluss für jeden der vier Kühlkreise kann mit Thermostatventilen individuell und voneinander unabhängig geregelt werden, womit ein Höchstmaß an Temperaturkonstanz auf dem für jeden der vier Kühlkreisläufe optimalen (durchaus unterschiedlichen) Level gewährleistet und damit die die Laufgenauigkeit und Verfügbarkeit sichergestellt werden kann.

Über den im Gehäuse angeordneten Elektromotor kann im Leistungsfall eine erhebliche Wärmemenge in das Gehäuse eingebracht werden, die entsprechend wieder abzuführen ist. Zur unmittelbaren Kühlung des Ankers, der Sägespindel und der Innenringe der Lager empfiehlt es sich, wenn die Sägespindel über eine dem sägewerkzeugabgewandten Ende der Sägespindel zugeordnete Drehdurchführung flüssigkeitsgekühlt ist, wozu in eine zur Sägespindelachse koaxiale, sich in Achsrichtung vorzugsweise über Loslager, Anker und Festlager erstreckende, Bohrung eine an die Drehdurchführung angeschlossenen Hülse derart eingesetzt ist, dass zwischen Bohrwandung und Hülse ein Strömungskanal gebildet ist. Ein Kühlmittel wird in die Bohrung eingeleitet und strömt durch die Buchse zu ihrem Endbereich am anderen Sägespindelende, wo der Übertritt in den Strömungskanal zwischen Buchse und Bohrwandung erfolgt, von wo das Kühlmittel in entgegengesetzter Richtung strömt und aus dem Gehäuse ausgeleitet wird.

Zur Kühlung des Stators kann der Stator derart in das Gehäuse eingesetzt sein, dass zwischen Stator und Gehäuse und/oder im den Stator umfassenden Gehäuse ein Strömungskanal zur Flüssigkeitskühlung des Stators gebildet ist. Bei der Temperierung des Stators ist auf eine gleichmäßige Arbeits- und Stillstandstemperatur zu achten, um die Isolierung der Statorwicklung im Arbeitsmodus nicht, durch die ständigen (betriebsimmanenten) Stromschwankungen, und in deren Folge Temperaturschwankungsbedingten Wärmedehnungen und Kontraktionen, zu beschädigen, und damit einen Kurz- oder Masseschluss zu vermeiden.

Zur Kühlung der Lager können diese derart in das Gehäuse eingesetzt sein, dass Loslager und/oder Festlager außenumfangsseitig in eine drehfest im Gehäuse in einem Lagerbock angeordnete Buchse eingesetzt sind, wobei zwischen Buchse und Lagerbock ein Strömungskanal zur Flüssigkeitskühlung der Lager gebildet ist. Die Kühlung der äußeren Lagerringe stabilisiert das System weiter und macht es dauerfest, wie es für praktisch spielfreie Festlager und einen industriellen Einsatz erforderlich ist.

In allen Fällen ist es Vorteilhaft, wenn der Strömungskanal schraubenlinienförmig um die Sägespindelachse verläuft. Damit wird eine umfänglich gleichmäßige Kühlung und damit gleichmäßige Temperaturverteilung sichergestellt.

Da bei größeren Lagern in der Regel die zulässige Grenzdrehzahl sinkt ist es von Vorteil, wenn Loslager und Festlager je wenigstens ein über Fluidleitungen an eine vorzugsweise zentrale Öl-Luftschmiervorrichtung angeschlossenes Wälzlager umfassen. Dies erlaubt die erforderlichen hohen Drehzahlen bei geringen Verlusten und langen Wartungsintervallen. Die Öl-Luftschmierung, mit der Öl in Minimalmengen in Schlierenform direkt auf die Wälzkörper eingeblasen wird, ermöglicht die für die Lagergröße hohen Drehzahlen und verursacht einen Überdruck im Lagergehäuse Inneren und verhindert so das Eindringen von Schmutz. Zudem wird feiner Abrieb, aus dem Lagerbetrieb mit dem durch die Drainagebohrungen abfließenden Gebrauchtöl, abgeschwemmt was beispielsweise bei Fettschmierung nicht möglich ist.

Die Spulen des Stators sind vorzugsweise aus Formdraht, also aus Draht mit beispielsweise drei, vier- oder mehreckigem Querschnitt, gebildet. Damit können punktuelle Kontaktstellen über den Querschnittsumfang vermieden werden, womit auch nach oftmaligen temperaturwechselbedingten Längenänderungen des Drahtes keine Beschädigung der Isolierung zu befürchten ist. Aus dem gleichen Grund wird vorgeschlagen die Polenden der Spulen des Stators stirn- und/oder loslagerseitig in axialer Richtung, insbesondere Sägespindelachsenparallel, aus dem Gehäuse zu führen.

### Kurze Beschreibung der Erfindung

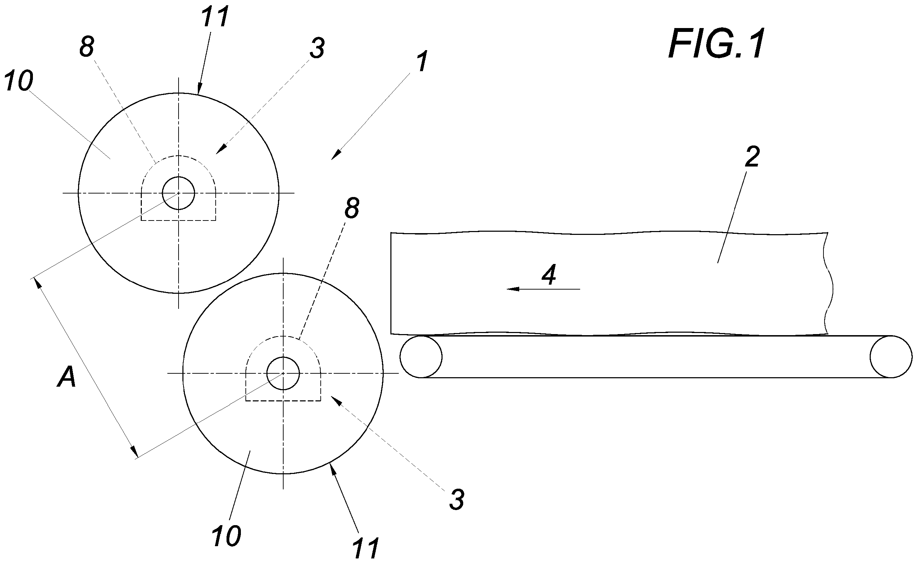

In der Zeichnung ist der Erfindungsgegenstand beispielsweise dargestellt. Es zeigen
- Fig. 1: eine Doppelspindelkreissäge in Stirnansicht,

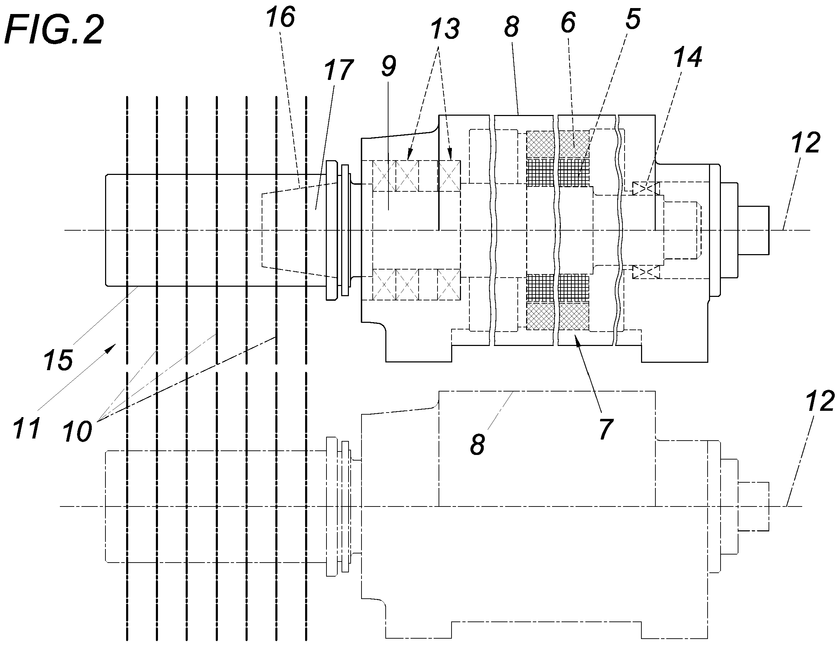

- Fig. 2: eine Sägegruppe der Doppelspindelkreissäge im schematischen Längsschnitt,

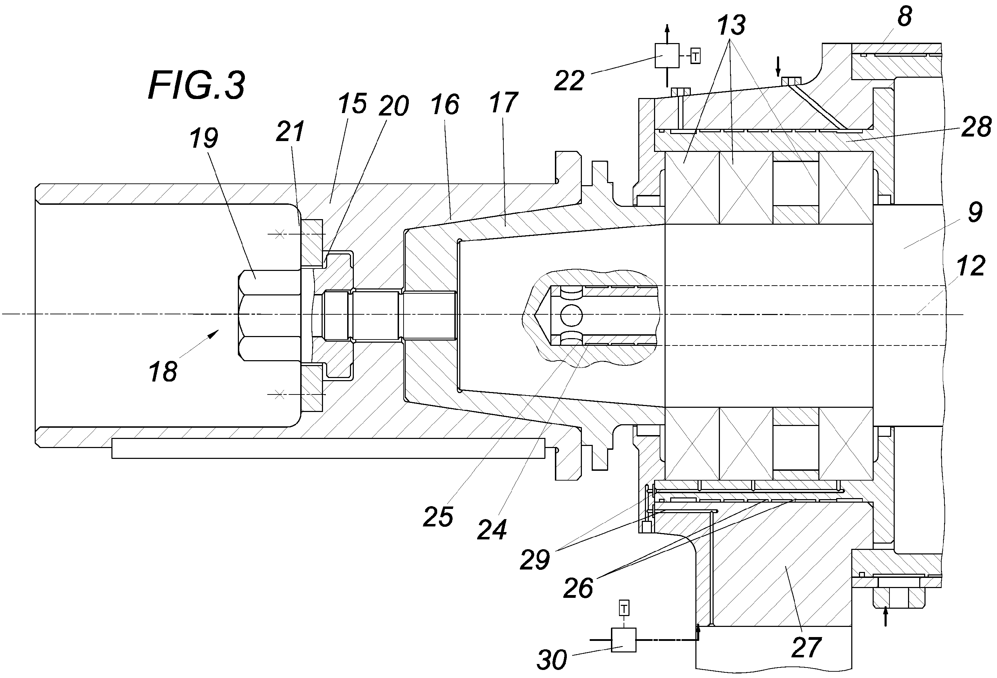

- Fig. 3: den vergrößerten und detaillierteren linken Abschnitt mit dem Festlager der Sägegruppe aus Fig. 2 und

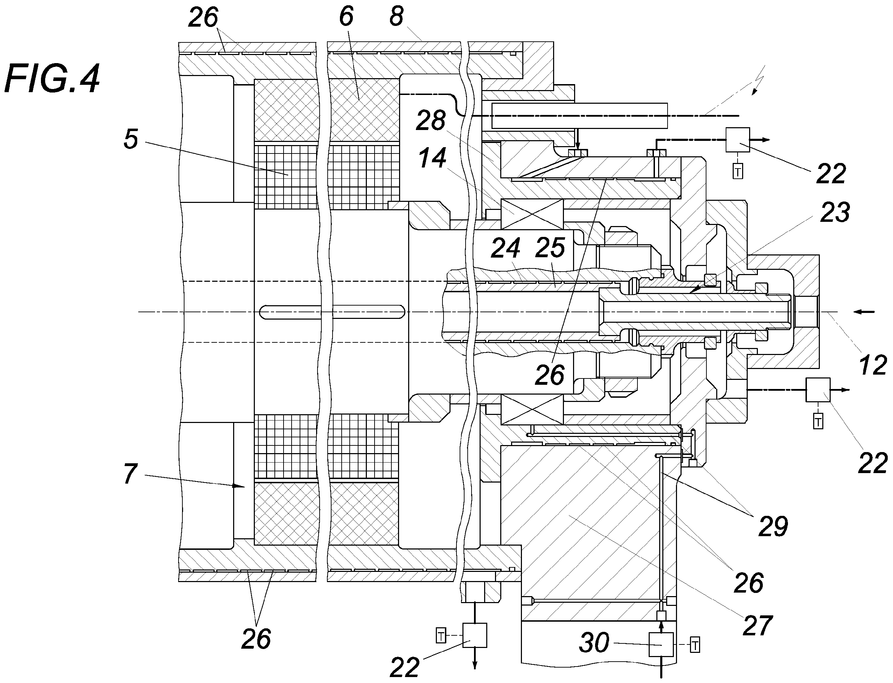

- Fig. 4: den vergrößerten und detaillierteren rechten Abschnitt mit dem Loslager der Sägegruppe aus Fig. 2

### Wege zur Ausführung der Erfindung

Die Doppelspindelkreissäge 1 zum Sägen von Holz 2 umfasst zwei Sägegruppen 3. Die Sägegruppen 3 sind in Schnittrichtung 4 des zu schneidenden Holzes 2 versetzt. Jede Sägegruppe 3 weist einen, einen Anker 5 und einen Stator 6 umfassenden, Elektromotor 7 für einen Drehantrieb einer in einem Gehäuse 8 gelagerten Sägespindel 9 auf. Die Sägespindel 9 ist mit wenigstens einem, wenigstens ein auswechselbares Kreissägeblatt 10 umfassenden, Sägewerkzeug 11 drehfest verbunden. Das Sägewerkzeug 11 und die Sägespindel 9 drehen sich im Antriebsfall also gemeinsam mit derselben Winkelgeschwindigkeit. Der Achsabstand A der Sägespindeln 9 ist mit einem nicht näher dargestellten Stelltrieb einstellbar. Auch der seitliche Versatz der Sägewerkzeuge 11 zueinander in Richtung der Sägespindelachse 12 kann mit diesem oder einem anderen Stelltrieb eingestellt werden, um sicherzustellen, dass die Kreissägeblätter 10 der beiden Sägewerkzeuge exakt zueinander ausgerichtet sind und in ein und derselben Schnittebene liegen.

Erfindungsgemäß ist der Anker 5 drehfest auf der Sägespindel 9 und ist der Stator 6 drehfest im Gehäuse 8 zwischen einem Festlager 13 und einem Loslager 14 der Sägespindel 9 angeordnet. Das Sägewerkzeug 11 ist dabei fliegend auf der Sägespindel 9 gelagert. Die Sägegruppen 3 sind Sägespindelachsenparallel und mit gleich ausgerichtetem Gehäuse 8 in einem nicht näher dargestellten Maschinenrahmen od. dgl. angeordnet.

Das Sägewerkzeug 11 umfasst wenigstens ein auf einem Werkzeugspanner 15 auswechselbar aufgenommenes Sägeblatt 10, gegebenenfalls zwei oder mehrere Sägeblätter 10, insbesondere eine Kreissägeblattgruppe. Der Werkzeugspanner 15 ist über einen Schnellwechselkonus 16 nach Art eines Steilkegels (beispielsweise 7/24) an der ein entsprechendes Gegenstück in Form eines konischen Achsstummels 17 aufweisenden Sägespindel 9 lösbar befestigt und mit einer zur Sägespindelachse 12 koaxialen Schraubverbindung 18 in der Montagestellung gesichert. Der Achsstummel 17 ist im Ausführungsbeispiel ein auf das Sägespindelende aufgesetztes Übergangsstück, kann aber auch direkt von der Sägespindel ausgebildet werden. Ein Kopf 19, ein Schrauben oder Mutternkopf, zur Betätigung der Schraubverbindung mit einem entsprechenden Werkzeug ist frei drehbar, aber axial gesichert im Werkzeugspanner 15 gelagert. Dazu ist der Kopf 19 ist dazu mit einer Schulter 20 ausgestattet, die einerends beim Festziehen der Schraubverbindung am Werkzeugspanner 15 anliegt und sich beim Lösen der Schraubverbindung und beim Abziehen des Werkzeugspanners 15 vom Achsstummel 17 an einer Ringscheibe 21 abstützt.

Der Antrieb, insbesondere Elektromotor 7, ist flüssigkeitsgekühlt. Der der Anker 5, der Stator 6, das Festlager 13, eine Gruppe von Wälzlagern, und das Loslager 14 sind flüssigkeitsgekühlt. Dazu sind vier mittels Temperaturregelventilen 22 unabhängig voneinander temperaturregelbare Kühlkreise vorgesehen. Zur Vermeidung von Taupunktsunterschreitungen im Gehäuse können die Kühlkreisläufe mit einer Temperaturregelung ausgestattet sein, der gegebenenfalls eine Heizung zugeordnet ist, um den Antrieb auch im Stillstand temperieren zu können.

Zur Kühlung des Ankers 5 und der Innenringe von Festlager 13 und Loslager 14 über die Sägespindel 9 ist die Sägespindel 9 über eine dem sägewerkzeugabgewandten Ende der Sägespindel 9 zugeordnete Drehdurchführung 23 flüssigkeitsgekühlt. Dazu ist in eine zur Sägespindelachse 12 koaxiale, sich in Achsrichtung vorzugsweise über Loslager, Anker und Festlager erstreckende, Bohrung 24 eine an die Drehdurchführung 23 angeschlossenen Hülse 25 derart eingesetzt, dass zwischen Bohrwandung und Hülse 25 ein Strömungskanal 26 gebildet ist. Der Stator 6 ist derart in das Gehäuse 8 eingesetzt, dass zwischen Stator 6 und Gehäuse 8 bzw. im den Stator 6 umfassenden Gehäuse 8 ein Strömungskanal 26 zur Flüssigkeitskühlung des Stators 6 gebildet ist. Im vorliegenden Ausführungsbeispiel ist der Strömungskanal 26 im Gehäuse 8 zwischen einer Statoraufnahme und einem Gehäusemantel vorgesehen. Loslager und/oder Festlager sind zur Kühlung außenumfangsseitig in eine drehfest im Gehäuse in einem Lagerbock 27 angeordnete Buchse 28 eingesetzt, wobei der Strömungskanal 26 zur Flüssigkeitskühlung der Lager zwischen Buchse 28 und Lagerbock 27 gebildet ist. Die Strömungskanäle der Lagerkühlungen, der Ankerkühlung und der Wellenkühlung verlaufen schraubenlinienförmig um die Sägespindelachse 12.

Zur Kühlung und Schmierung von Loslager 14 und Festlager 13 sind diese über je je wenigstens eine Fluidleitung 29 an eine zentrale Öl-Luftschmiervorrichtung 30 angeschlossen.

## Patentansprüche

1. Doppelspindelkreissäge (1) zum Sägen von Holz (2) mit zwei Sägegruppen (3), wobei jede Sägegruppe (3) einen, einen Anker (5) und einen Stator (6) umfassenden, Antrieb (7) für einen Drehantrieb einer in einem Gehäuse (8) gelagerten Sägespindel (9) aufweist, die mit einem, auswechselbare Kreissägeblätter (10) umfassenden, Sägewerkzeug (11) drehfest verbunden ist und wobei das Sägewerkzeug (11) fliegend auf der Sägespindel (9) gelagert ist, **dadurch gekennzeichnet, dass** der Anker (5) drehfest auf der Sägespindel (9) und der Stator (6) drehfest im Gehäuse (8) zwischen einem Festlager (13) und einem Loslager (14) der Sägespindel (9) angeordnet ist, wobei der Achsabstand (A) der Sägespindeln (9) mit einem Stelltrieb einstellbar ist.

2. Doppelspindelkreissäge nach Anspruch 1, **dadurch gekennzeichnet, dass** das Sägewerkzeug (11) eine auf einem Werkzeugspanner (15) auswechselbar aufgenommene Kreissägeblattgruppe umfasst, wobei der Werkzeugspanner (15) über einen Schnellwechselkonus (16) an der ein entsprechendes Gegenstück in Form eines konischen Achsstummels (17) aufweisenden Sägespindel (9) lösbar befestigt und vorzugsweise mit einer zur Sägespindelachse (12) koaxialen Schraubverbindung (18) in der Montagestellung gesichert ist.

3. Doppelspindelkreissäge nach Anspruch 2, **dadurch gekennzeichnet, dass** ein Kopf (19) zur Betätigung der Schraubverbindung (18) frei drehbar aber axial gesichert im Werkzeugspanner (15) gelagert ist.

4. Doppelspindelkreissäge nach einem der Ansprüche 1 bis 3, **dadurch gekennzeichnet, dass** der Anker (5) und/oder der Stator (6) des Antriebs (7) flüssigkeitsgekühlt sind.

5. Doppelspindelkreissäge nach einem der Ansprüche 1 bis 4, **dadurch gekennzeichnet, dass** der Anker (5), der Stator (6), das Festlager (13) und das Loslager (14) flüssigkeitsgekühlt sind, wozu vorzugsweise vier mittels Temperaturregelventilen (22) unabhängig voneinander temperaturregelbare Kühlkreise vorgesehen sind.

6. Doppelspindelkreissäge nach Anspruch 4 oder 5, **dadurch gekennzeichnet, dass** die Flüssigkeitskühlung zur Vermeidung von Taupunktsunterschreitungen im Gehäuse (8) mit einer Temperaturregelung (T) ausgestattet ist.

7. Doppelspindelkreissäge nach einem der Ansprüche 1 bis 6, **dadurch gekennzeichnet, dass** die Sägespindel (9) über eine dem sägewerkzeugabgewandten Ende der Sägespindel (9) zugeordnete Drehdurchführung (23) flüssigkeitsgekühlt ist, wozu in eine zur Sägespindelachse (12) koaxiale, sich in Achsrichtung vorzugsweise über Loslager (14), Anker (5) und Festlager (13) erstreckende, Bohrung (24) eine an die Drehdurchführung (23) angeschlossene Hülse (25) derart eingesetzt ist, dass zwischen Bohrwandung und Hülse (25) ein Strömungskanal (26) gebildet ist.

8. Doppelspindelkreissäge nach einem der Ansprüche 1 bis 7, **dadurch gekennzeichnet, dass** der Stator (6) derart in das Gehäuse (8) eingesetzt ist, dass zwischen Stator (6) und Gehäuse (8) ein Strömungskanal (26) zur Flüssigkeitskühlung des Stators (6) gebildet ist und/oder das den Stator (6) umfassende Gehäuse (8) einen Strömungskanal (26) zur Flüssigkeitskühlung des Stators aufweist.

9. Doppelspindelkreissäge nach Anspruch 8, **dadurch gekennzeichnet, dass** das Gehäuse (8) außenumfänglich mit einem Mantelrohr ausgestattet ist, wobei der Strömungskanal (26) zur Flüssigkeitskühlung des Stators zwischen Mantelrohr und Stator (6), insbesondere zwischen Mantelrohr und Gehäuse (8), gebildet ist.

10. Doppelspindelkreissäge nach einem der Ansprüche 1 bis 9, **dadurch gekennzeichnet, dass** Loslager (14) und/oder Festlager (13) außenumfangsseitig in eine drehfest im Gehäuse (8) in einem Lagerbock (27) angeordnete Buchse (28) eingesetzt sind, wobei zwischen Buchse (28) und Lagerbock (27) ein Strömungskanal (26) zur Flüssigkeitskühlung der Lager gebildet ist.

11. Doppelspindelkreissäge nach einem der Ansprüche 7 bis 10, **dadurch gekennzeichnet, dass** der Strömungskanal (26) schraubenlinienförmig um die Sägespindelachse (12) verläuft.

12. Doppelspindelkreissäge nach einem der Ansprüche 1 bis 11, **dadurch gekennzeichnet, dass** Loslager (14) und Festlager (13) je wenigstens ein über Fluidleitungen (29) an eine vorzugsweise zentrale Öl-Luftschmiervorrichtung (30) angeschlossenes Wälzlager umfassen.

13. Doppelspindelkreissäge nach einem der Ansprüche 1 bis 12, **dadurch gekennzeichnet, dass** die Spulen des Stators (6) aus Formdraht gebildet sind.

14. Doppelspindelkreissäge nach einem der Ansprüche 1 bis 13, **dadurch gekennzeichnet, dass** die Polenden der Spulen des Stators (6) stirn- und/oder loslagerseitig in axialer Richtung, insbesondere Sägespindelachsenparallel, aus dem Gehäuse geführt sind.

## Claims

1. Dual-spindle circular saw (1) for sawing wood (2) comprising two saw groups (3), wherein each saw group (3) has a drive (7) having an armature (5) and a stator (6) for the rotary driving of a saw spindle (9) which is mounted in a housing (8) and which is connected in a rotationally fixed manner to a saw tool (11) comprising exchangeable circular saw blades (10), and wherein the saw tool (11) is floatingly mounted on the saw spindle (9), **characterized in that** the armature (5) is arranged in a rotationally fixed manner on the saw spindle (9) and the stator (6) is arranged in a rotationally fixed manner in the housing (8) between a fixed bearing (13) and a floating bearing (14) of the saw spindle (9), wherein the center distance (A) of the saw spindles (9) is adjustable by means of an actuator.

2. Dual-spindle circular saw according to claim 1, **characterized in that** the saw tool (11) comprises a circular saw blade group interchangeably accommodated on a tool clamp (15), wherein the tool clamp (15) is detachably fastened via a quick-change cone (16) to the saw spindle (9) having a corresponding counterpart in the form of a conical axle stub (17) and is preferably secured in the mounting position by means of a screw connection (18) coaxial with the saw spindle axis (12).

3. Dual-spindle circular saw according to claim 2, **characterized in that** a head (19) for actuating the screw connection (18) is mounted in the tool clamp (15) so as to be freely rotatable but axially secured.

4. Dual-spindle circular saw according to one of claims 1 to 3, **characterized in that** the armature (5) and/or the stator (6) of the drive (7) are liquid-cooled.

5. Dual-spindle circular saw according to one of claims 1 to 4, **characterized in that** the armature (5), the stator (6), the fixed bearing (13) and the floating bearing (14) are liquid-cooled, for which purpose preferably four cooling circuits which can be temperature-controlled independently of one another by means of temperature control valves (22) are provided.

6. Dual-spindle circular saw according to claim 4 or 5, **characterized in that** the liquid cooling system is equipped with a temperature control (T) to prevent undershooting of the dew point in the housing (8).

7. Dual-spindle circular saw according to one of the claims 1 to 6, **characterized in that** the saw spindle (9) is liquid-cooled via a rotary union (23) assigned to the end of the saw spindle (9) facing away from the saw tool, for which purpose a sleeve (25) connected to the rotary union (23) is inserted into a bore (24) coaxial with the saw spindle axis (12), preferably via the floating bearing (14), armature (5) and fixed bearing (13) in the axial direction, in such a way that a flow channel (26) is formed between the bore wall and sleeve (25).

8. Dual-spindle circular saw according to one of claims 1 to 7, **characterized in that** the stator (6) is inserted into the housing (8) in such a way that a flow channel (26) for liquid cooling of the stator (6) is formed between the stator (6) and the housing (8) and/or the housing (8) enclosing the stator (6) has a flow channel (26) for liquid cooling of the stator.

9. Dual-spindle circular saw according to claim 8, **characterized in that** the housing (8) is provided with a jacket tube around its outer circumference, wherein the flow channel (26) for liquid cooling of the stator is formed between the jacket tube and the stator (6), in particular between the jacket tube and the housing (8).

10. Dual-spindle circular saw according to one of claims 1 to 9, **characterized in that** floating bearings (14) and/or fixed bearings (13) are inserted on the outer circumference into a bushing (28) arranged in a rotationally fixed manner in the housing (8) in a bearing block (27), wherein a flow channel (26) for liquid cooling of the bearings is formed between the bushing (28) and the bearing block (27).

11. Dual-spindle circular saw according to one of claims 7 to 10, **characterized in that** the flow channel (26) extends helically around the saw spindle axis (12).

12. Dual-spindle circular saw according to one of claims 1 to 11, **characterized in that** floating bearing (14) and fixed bearing (13) each comprise at least one rolling bearing connected via fluid lines (29) to a preferably central oil-air lubrication device (30).

13. Dual-spindle circular saw according to one of claims 1 to 12, **characterized in that** the coils of the stator (6) are formed of shaped wire.

14. Dual-spindle circular saw according to one of the claims 1 to 13, **characterized in that** the pole ends of the coils of the stator (6) are guided out of the housing on the end face side and/or floating bearing side in the axial direction, in particular parallel to the saw spindle axis.

## Revendications

1. Scie circulaire à double broche (1) destinée à scier du bois (2) comprenant deux groupes de scie (3), dans laquelle chaque groupe de scie (3) présente un entraînement (7) comprenant un induit (5) et un stator (6) pour l'entraînement en rotation d'une broche de scie (9) montée dans un boîtier (8), laquelle est reliée de manière solidaire en rotation à un outil de sciage (11) comprenant des lames de scie circulaire (10) interchangeables, et dans laquelle l'outil de sciage (11) est monté flottant sur la broche de scie (9),
**caractérisée en ce que** l'induit (5) est disposé de manière solidaire en rotation sur la broche de scie (9) et le stator (6) de manière solidaire en rotation dans le boîtier (8) entre un palier fixe (13) et un palier libre (14) de la broche de scie (9), dans laquelle l'entraxe (A) des broches de scie (9) peut être réglé avec un actionneur.

2. Scie circulaire à double broche selon la revendication 1, **caractérisée en ce que** l'outil de sciage (11) comprend un groupe de lames de scie circulaire logé de manière interchangeable sur un porte-outils (15), dans laquelle le porte-outils (15) est fixé de manière amovible par le biais d'un cône à changement rapide (16) sur la broche de scie (9) qui présente une pièce complémentaire correspondante en forme de bout d'essieu conique (17) et de préférence est fixé dans la position de montage à l'aide d'une liaison vissée (18) coaxiale par rapport à l'axe de broche de scie (12).

3. Scie circulaire à double broche selon la revendication 2, **caractérisée en ce qu'**une tête (19) est montée dans le porte-outils (15) pour l'actionnement de la liaison vissée (18) de manière libre en rotation mais sécurisée axialement.

4. Scie circulaire à double broche selon une des revendications 1 à 3, **caractérisée en ce que** l'induit (5) et/ou le stator (6) de l'entraînement (7) sont refroidis par un liquide.

5. Scie circulaire à double broche selon une des revendications 1 à 4, **caractérisée en ce que** l'induit (5), le stator (6), le palier fixe (13) et le palier libre (14) sont refroidis par un liquide, et pour se faire de préférence quatre circuits de refroidissement à températures réglables de manière indépendante les uns des autres sont prévus à l'aide de vannes de régulation de température (22).

6. Scie circulaire à double broche selon la revendication 4 ou 5, **caractérisée en ce que** le refroidissement par liquide est équipé d'une régulation de température (T) pour éviter de descendre au-dessous du point de condensation dans le boîtier (8).

7. Scie circulaire à double broche selon une des revendications 1 à 6, **caractérisée en ce que** la broche de scie (9) est refroidie par un liquide par le biais d'une traversée rotative (23) associée à l'extrémité de la broche de scie (9) opposée à l'outil de sciage, et pour se faire, dans un alésage (24) coaxial à l'axe de broche de scie (12) et qui s'étend dans la direction de l'axe de préférence sur le palier flottant (14), l'induit (5) et le palier fixe (13), un manchon (25) relié à la traversée rotative (23) est mis en place de telle sorte qu'un canal d'écoulement (26) soit formé entre la paroi de l'alésage et le manchon (25).

8. Scie circulaire à double broche selon une des revendications 1 à 7, **caractérisée en ce que** le stator (6) est mis en place dans le boîtier (8) de telle sorte qu'entre le stator (6) et le boîtier (8) un canal d'écoulement (26) soit formé pour le refroidissement par liquide du stator (6) et/ou le boîtier (8) comprenant le stator (6) présente un canal d'écoulement (26) pour le refroidissement par liquide du stator.

9. Scie circulaire à double broche selon la revendication 8, **caractérisée en ce que** le boîtier (8) est équipé sur sa périphérie extérieure d'une gaine de revêtement, dans laquelle le canal d'écoulement (26) pour le refroidissement par liquide du stator est formé entre la gaine de revêtement et le stator (6), en particulier entre la gaine de revêtement et le boîtier (8).

10. Scie circulaire à double broche selon une des revendications 1 à 9, **caractérisée en ce que** le palier flottant (14) et/ou le palier fixe (13) du côté de la périphérie extérieure sont mis en place dans une douille (28) disposée de manière solidaire en rotation dans le boîtier (8) dans un support de palier (27), dans laquelle entre la douille (28) et le support de palier (27) est formé un canal d'écoulement (26) pour le refroidissement par liquide des paliers.

11. Scie circulaire à double broche selon une des revendications 7 à 10, **caractérisée en ce que** le canal d'écoulement (26) s'étend en forme d'hélice autour de l'axe de broche de scie (12).

12. Scie circulaire à double broche selon une des revendications 1 à 11, **caractérisée en ce que** le palier flottant (14) et le palier fixe (13) comprennent chacun au moins un palier à rouleaux relié par le biais de conduites de liquide (29) à un dispositif de lubrification air-huile (30) de préférence centralisé.

13. Scie circulaire à double broche selon une des revendications 1 à 12, **caractérisée en ce que** les bobines du stator (6) sont formées de fil profilé.

14. Scie circulaire à double broche selon une des revendications 1 à 13, **caractérisée en ce que** les extrémités des pôles des bobines du stator (6) sont dirigées hors du boîtier du côté frontal et/ou du palier flottant dans la direction axiale, de préférence parallèlement à l'axe de broche de scie.
